Europäisches Patentamt

European Patent Office

Office européen des brevets

(19)

(11) **EP 1 149 242 B1**

(12) **EUROPÄISCHE PATENTSCHRIFT**

| | |
|---|---|
| (45) Veröffentlichungstag und Bekanntmachung des Hinweises auf die Patenterteilung:<br>**04.08.2004 Patentblatt 2004/32** | (51) Int Cl.⁷: **F03G 7/08** |
| (21) Anmeldenummer: **00901837.5** | (86) Internationale Anmeldenummer:<br>**PCT/IB2000/000125** |
| (22) Anmeldetag: **07.02.2000** | (87) Internationale Veröffentlichungsnummer:<br>**WO 2000/046501 (10.08.2000 Gazette 2000/32)** |

(54) **VORRICHTUNG ZUR GEWINNUNG ELEKTRISCHER ENERGIE AUS KINETISCHER ENERGIE VON FAHRZEUGEN**

APPARATUS FOR GAINING ELECTRIC ENERGY FROM THE KINETIC ENERGY OF VEHICLES

APPAREIL POUR OBTENIR DE L'ENERGIE ELECTRIQUE A PARTIR DE L'ENERGIE CINETIQUE DEVEHICULES

| | |
|---|---|
| (84) Benannte Vertragsstaaten:<br>**AT BE CH CY DE DK ES FI FR GB GR IE IT LI LU MC NL PT SE** | (72) Erfinder: **Padera, Josef**<br>**6971 Hard (AT)** |
| (30) Priorität: **05.02.1999 DE 19904741** | (74) Vertreter: **Zipse + Habersack**<br>**Wotanstrasse 64**<br>**80639 München (DE)** |
| (43) Veröffentlichungstag der Anmeldung:<br>**31.10.2001 Patentblatt 2001/44** | (56) Entgegenhaltungen:<br>**DE-A- 4 225 578**   **DE-A- 4 327 477**<br>**US-A- 4 409 489**   **US-A- 4 418 542** |
| (73) Patentinhaber: **Padera, Josef**<br>**6971 Hard (AT)** | |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

In unserer Zeit nützen wir viele Erzeugungsquellen der Elektroenergie, aber wenig reine Quellen aus, die nicht die Ökologie des Lebensraumes stören. Zum Beispiel:

Die Windquellen. Die Landschaft ist mit ungerechneten Mengen Windelektrowerken bedeckt; oder mit Sonnenkollektoren. Das macht keinen guten Eindruck. Ebenso handelt es sich beim Bau der Wasserelektrowerke um einen großen Eingriff in den Lebensraum An der ersten Stelle steht der Ausbau von ATOM- und KOHLEKRAFTWERKEN.

Der Weltverbrauch der Energie steigt. In der Perspektive des Verbrauches 1994 schätzt die Internationale Agentur für Energie (IEA) den Verbrauch der Energie in den industriellen Ländern bis zum Jahr 2010 um 50%. Ebenso steigt die Emission der schädlichen Stoffe in demselben Zeithorizont. Die Lösung sehe ich in der Ausnützung der nicht traditionellen Quellen der Elektroenergie in höchst möglichem Maße.

Die vorgeschlagene Lösung, die ich hier vorstelle, trifft die Ausnützung der heutigen Straßen. Sie sind stets durch viele Autos überfüllt, die einen unausgenützten Energiefluß darstellen.

Aus der Patentschrift US-A-4,409,489 ist bereits eine Vorrichtung zur Gewinnung elektrischer Energie aus kinetischer Energie von Fahrzeugen, wie sie im Oberbegriff von Patentanspruch 1 definiert ist, bekannt. Ausgehend hiervon kann die Aufgabe der vorliegenden Erfindung in der Verbesserung dieser kannten Vorrichtung gesehen werden.

ZUERST DIE VORTEILE:

a) keine Schädigung der vorliegenden Natur;
b) keine Verunreinigung des Lebensraumes, des oberen und des Grundwassers;
c) keine physikalische und chemische Verunreinigung durch Abfallelemente, z.B. Uran oder Kohlendioxyd usw.

Ein anderer Vorteil ist Ausnützung und Beitrag der Autobeförderung zu dem neuen ökologischen Prozeß. Darin sehe ich eine große Zukunft.

ZUSAMMENSTELLUNG DER VORTEILE DES - AKEK - ELEKTROWERKES

1) Der Lebensraum wird nicht durch chemische Exhalationen bedroht.
2) Durch seine Lage schädigt es nicht das umliegende Land.
3) Es hilft mit seiner Energie ohne langen Prozeß.
4) Es führt zu größerer Sicherheit im Verkehr.
5) Durch sein Prinzip nützt es eine neue Quelle der Energie aus.
6) AKEK ist ökonomisch.
7) Einfache Konstruktion.
8) Die Montage ist in Stadtzentren, auf den Straßen- und Eisen- bahnübergängen, auf Straßen mit großem Gefälle möglich.
9) AKEK nützt jeden Wagen 4x.
10) Ökonomisches und ökologisches Prinzip des Bremsens.
11) Es ist Automobilen aller Art ohne Unterschied und ohne Veränderung einzurichten.

DAS PRINZIP **AKEK**

Es ist auf dasselbe System gegründet wie z.B. die Gründung eines Gartens. Stellen wir uns einen Gummischlauch vor, einen Meter lang, der an einem Ende an die Wasserleitung angeschraubt ist. Auf der anderen Seite liegt er frei auf dem Boden. Den Schlauch führen wir über einen geöffneten Hahn so, daß am anderen Ende Wasser fließen wird. Wir schließen den Hahn. Wasser fließt nicht mehr. Dann treten wir auf den Schlauch und beobachten das freie Ende. Bei jedem Tritt spritzt aus dem freien Ende Wasser. Das können wir wiederholen, solange im Schlauch Wasser ist.

Auf diesem Prinzip sind die Druckschläuche (89+90+91) gezeichnet.

**MONTAGE**

Die richtige Lage der PANEELE RECHTS UND LINKS (13+22) spielt die Hauptrolle und beeinflußt die ganze Leistung und Lebensdauer der AKEK. Das Elektrowerk ist konstruiert auf dem Prinzip, daß es von jedem Wagen ein paar Prozent der kinetischen Energie abnimmt, die dem direkten Verhältnis seines Widerstandes gleich ist.

Um dieses Prinzip einzuhalten und nicht negativ einzuwirken, müssen folgende Regeln eingehalten werden:

1) Montage: nur an den Stellen zu montieren, wo die Geschwindigkeit vermindert werden muß. a) aus Sicherheitsgründen oder b) bei anderen Regelungen, z.B. bei der Ausfahrt von Autobahnen, Hauptstraßen, an der Straßenkreuzung, vor den Schulen, Geschäftszentren oder Stadtzentren, wo die Geschwindigkeitsverminderung vorgeschrieben ist, und im Smogzentrum.
2) Auf den Straßen mit schiefen Ebenen. Das bedeutet, daß die Autos, die von der Höhe kommen, aus Sicherheitsgründen ihre Geschwindigkeit vermindern müssen.
3) Montage von AKEK auf anderen Übergängen, wo die Geschwindigkeitsverminderung vorgeschrieben ist.

FUNKTION DER FAHRBAHN

Jedes Auto soll in der optimalen Spur über die R+L -S- Paneele (13+22) fahren. Wir müssen die Fahrbahn in dem gegebenen Abschnitt z.B. durch sichtbare Linien kennzeichnen. Durch diese Methode begrenzen wir den Weg der Automobile, ohne daß sie an die Seiten fahren.

REPARATUREN

Die größte Belastung wird praktisch auf den ganzen Kreisumfang auf die Rechts + Links -S- Paneele (13+22) gelegt, wo bei den Reparaturen der einfache, leichte Paneelwechsel durchführbar sein müssen. Deshalb werden die Paneele auf diese Belastung konstruiert, und zwar in der Form von einfachen, frei aufeinander bindenden Teile, ebenso wie bei den Bandfahrzeugen.

FUNKTION DES AUTOMOBILS

Ziehen wir in Betracht, daß der Wagen sich mit der Geschwindigkeit (v1) bewegt und die kinetische Energie hat:

$$E_{k_1} = \frac{1}{2}\, mv_1^2$$

Wenn der Wagen sich gegen die Richtung (v1) der Geschwindigkeit bewegt und die kinetische Energie hat mit der ständigen Kraft (F), R+L -S- Paneel (13+22), ändert sich seine Geschwindigkeit auf die Geschwindigkeit (v2) und die kinetische Energie auf den Wert

$$E_{k_2} = \frac{1}{2}\, mv_2^2$$

Dabei üben die R+L -S- Paneele (13+22) durch die wirkende Kraft (F) die mechanische Arbeit aus, die der Änderung der kinetischen Energie entspricht:

$$E_{k_2} - E_{k_1} = \frac{1}{2}\, mv_2^2 - \frac{1}{2}\, mv_1^2 = \Delta E_K$$

Die Änderung der kinetischen Energie des Wagens ΔEK ist der mechanischen Arbeit (W) und der wirkenden Kraft gleich, sie ist:

$$\Delta E_k = W$$

Wenn wir weiter in Betracht ziehen, daß die Rader des Wagens gleichzeitig die Schiebebewegung und Rotation ausüben, ist die kinetische Energie:

$$E_k = \frac{1}{2}\, mv^2 + \frac{1}{2}\, J\omega^2$$

FUNKTION

In der Anfangsphase überfahren die Räder jedes Wagens zuerst den DRUCKBEHÄLTER (96), welcher ständig mit Wasser nachgefüllt wird (wie man auf Fig. 1+2 sehen kann) und die Abnahme der Wassermenge in der Druckrohrleitung ausgleicht. Der Wagen fährt mit seinen Rädern auf das RECHTS - LINKS -S- PANEEL (13+22) ein, auf dem die Deckfolie (88) montiert ist. Sie hat die Aufgabe, den Widerstand zwischen den Rädern des Autos und der DRUCKROHRLEITUNG (89+90+91) zu vermindern und schützt gleichzeitig gegen die Beschädigung von der oberen Außenseite. (Siehe den sichtbaren Unterschied Fig. 5+6). Im Inneren der RECHTS + LINKS -S PANEELE (13+22) ist die DRUCKROHRLEITUNG in der ganzen Lange (89+90+91). Durch den Einfluß der kinetischen Energie und des Gewichtes des Wagens, die sie auf die Räder überträgt, drücken sie das Wasser unter hohem Druck in die Rohrleitung.

Der Druck des Wassers außerhalb der DRUCKROHRLEITUNG (89+90+91) wird positiv durch ihre Lagerung in der Form des Buchstaben -S - transformiert und weiter in den Halbkreiskurven, die in der Serie in der ganzen Länge der Röhren anbinden. Das bedeutet, daß die kinetische Energie des Wagens in der direkten Richtung seiner Bewegung wirkt und durch seine Geschwindigkeit und das Wagengewicht gegeben ist, die im Verhältnis zur Druckrohrleitungs-Länge (89+90+91) kürzer ist. Diese Druckrohrleitung ist fest zu der PANEELEINLAGE (92) einmontiert, so daß sie sich bei der Durchfahrt des Wagens seitlich nicht bewegen kann.

Die PANEELEINLAGE (92) dient auch als Dichtungs- und Haltungsdecke der DRUCKROHRLEITUNG (89+90+91). Die RECHTS UND LINKS -S-PANEELE (13+22) haben eine untere PLATTE (93), die auch eine glatte Oberfläche hat und die DRUCKROHRLEITUNG (89+90+91) gegen Beschädigung schützt.

So mit Druck beaufschlagtes Wasser wird unter hohem Druck über ein EINBAHN-VENTIL (43) parallel in die DRUCKSCHLÄUCHE (33) durchgelassen, welche von dem RECHTEN UND LINKEN -S- PANEEL (13+22) hinausführen. Die SCHLAUCHE (33) sind weiter an das ZENTRALE VENTIL (53) angeschlossen und weiter auf den VERTEILER (60), wo man zwei Grundvarianten A + B benützen kann.

A-VARIANTE: Es handelt sich um einen zweilagigen Zweiweg verteiler, der in der Lage ist,

a) bei genügendem Druck freien Durchfluß der Flüssigkeiten zu dem Generator zu ermöglichen, und

b) bei niedrigem Druck den schwankenden Durchfluß der Flüssigkeit zu schließen und den Durchfluß über das VENTIL DES DRUCKKESSELS (63) und weiter in den DRUCKKESSEL (83) zu öffnen.

Dieser Kessel läßt Wasser in den HYDROGENERATOR (85) bis zu der eingestellten Druckgrenze. Der Druckkessel ist gegen Überdruck durch ein SICHERHEITSVENTIL (58) gesichert. Da es sich um einen Serienbau der Behälter handelt, müssen diese auf einen Mehrüberdruck des Minutendurchflusses des Generators gebaut werden.

B-Variante: Druckquelle mit einem Hydrogenerator, den man für drei verschiedene Drücke benützen kann. Der Höchstdruck ist auf dem Druckventil bei dem Hydrogenerator eingestellt, und die niedrigen Drücke werden stufenweise durch einen VERTEILER (60) umgeschaltet, wenn der Bedarf des DRUCKKESSELS (83) mit dem VENTIL DES DRUCKKESSELS (63) fällt.

Die Art der VERTEILER (60) ist verschieden, sie werden nach der Konstruktion, Leistung und Stufe der Automatisation gerichtet. Das Wasser ist unter hohem Druck durch verschiedene Prozesse durchgegangen. Die letzte Phase ist, daß Wasser über eine DT)SE (80) geht, die ihren Druck vervielfältigt und auf Maximum transformiert. Die optimale Lage der DÜSE (80) richtet den Wasserdruck mit ,maximaler Wirkung auf die Schaufel der TURBINE (86), auf die der HYDROGENERATOR (85) angebunden wird und von dem der ELEKTROSTROM DURCH LEITUNG (113) in den TRANSFORMATOR (100) geleitet wird. Weiter wird das Wasser über den DURCHGANGSFILTER (87) geleitet, der die Flüssigkeit (Wasser) in gutem Betriebszustand hält, so daß eine gute Tätigkeit der ganzen Einrichtung gesichert wird. Die Grundforderung auf den FILTER (87) ist, daß er einen minimalen Druckverlust im Zehntel der MPa hätte. Die Flüssigkeit (Wasser) geht weiter über die WASSERPUMPE (99), die das Wasser zurück über die Einrichtung für die ENTLÜFTUNG (98), weiter über das ZENTRALVENTIL (53),welches auf die LEITUNGSRÖHREN (33) auf RECHTS - LINKS -S- PANEELE verteilt und die den Umfang des Elektrowerkes schließen.

APPLIKATION DER FLÜSSIGKEITSMECHANISMEN

Die hydraulischen und pneumatischen Mechanismen sind ein bedeutender Konstruktionsteil, die Nutzungswerte werden durch die Verbindung mit den elektronischen Leitungssystemen ausdrucksvoll erhöht, werden auf die ganze Einrichtung übertragen und erhöhen so die Produktivität und Verläßlichkeit des ganzen Elektrowerkes. Die Bestimmung der Wirkung ist die Sache der Experimente. Außer den leicht meßbaren Parametern wie Druck, Durchfluß, Drehzahl und Moment müssen wir immer den Wert des geometrischen Umfangs wissen. In der Zukunft kann man in das Gebiet des Elektrowerkes noch einen Hilfshydrogenerator einsetzen, der für die sehr niedrigen und hohen Drücke bestimmt ist.

Ein wichtiger weiterer Faktor, mit dem wir die Leistung des Elektrowerkes beeinflussen können, ist die direkte Abhängigkeit von den Eingangsventilen, Schließen und Reduktionsventilen und den Durchgangsventilen; weiter in der Abhangigkeit von den hydraulischen und Reduktionsventilen, deren Betatigung mechanisch oder elektrisch ist, die wir in den Umfang einführen müssen und so die Elektrowerke nach den speziellen Bedingungen konstruieren können.

DIE ZUKUNFT VON AKEK

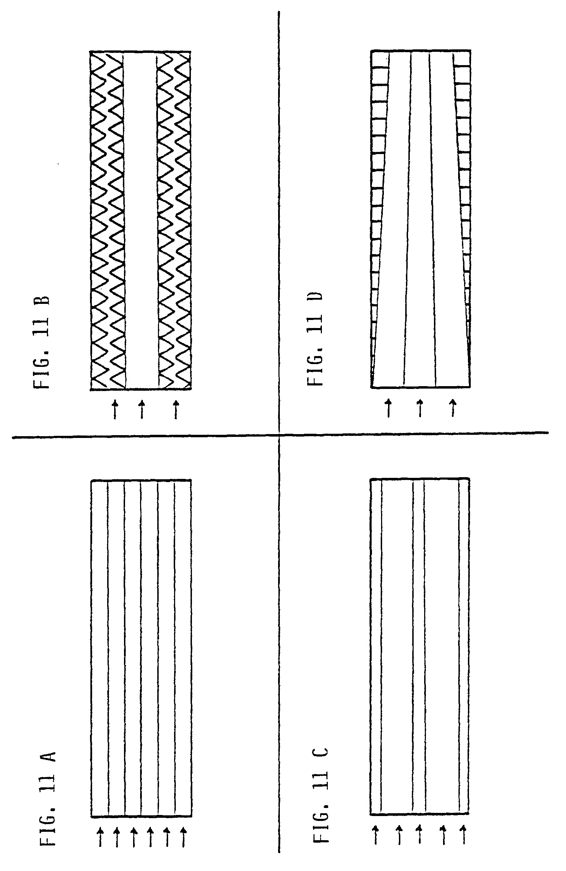

Den Vorteil sehe ich in der Verbesserung der Funktion der Druckschläuche, wie es auf Fig. 11 B + C gezeichnet ist. Sie sind auf die im Durchmesser starken Hauptschläuche undschwache nur ergänzend. Bei schwachem Verkehr arbeiten nur die schwachen Druckröhren. Bei größerem Verkehr werden auch die weiteren Druckröhren eingeschaltet. Bei maximalem Verkehr sind endlich alle Schläuche in Tätigkeit, LINKS + RECHTS -S - PANEELE: Bei sinkendem Verkehr in der Gegenrichtung werden verschiedene Druckschläuche ausgeschaltet mit Hilfe:

A) des Vorteils
B) des Computers, der im Abhang auf dem elektrischen, optischen Fühler arbeitet. Er ist auf die Fahrbahn aufmontiert.

BESCHREIBUNG ZU DEN BILDERN:

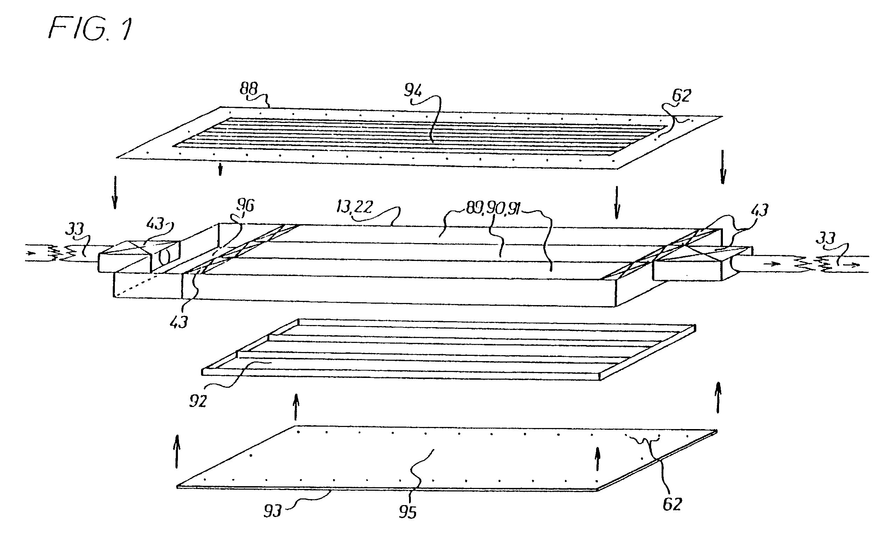

Fig. 1) Auf dem Bild sind alle Teile, aus denen sich R+L - S - Paneel (13+22) zusammensetzt. Druckröhren (89+90+91) sind in der horizontalen Richtung gezeichnet.

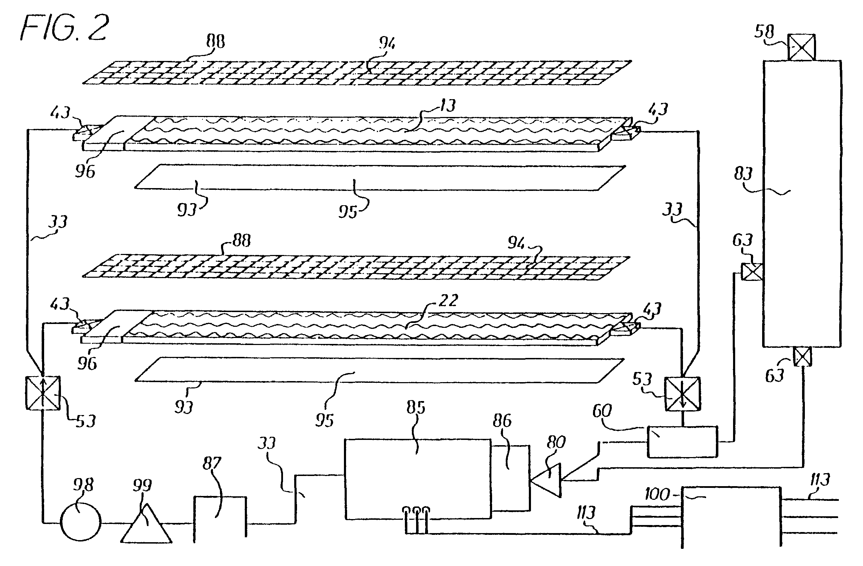

Fig. 2) Gesamtansicht auf AKEK Hauptteile, von denen es zusammengesetzt ist.

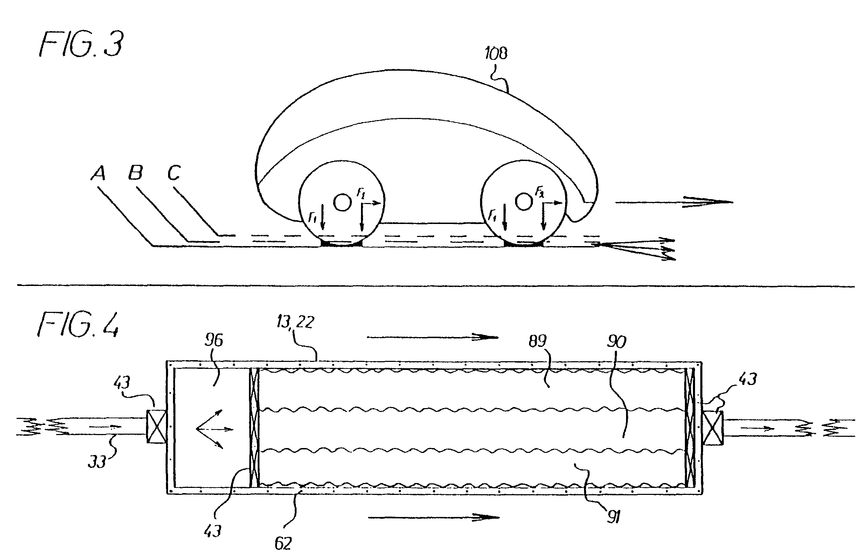

Fig. 3) Prinzip der Verlegung der Kräfte des Automobils Fl und F2. Sie wirken auf zwei im Durchschnitt verschiedene Sorten der Druckschläuche A+B und A+C. Die schwarz gezeichnete Fläche unter den Rädern des Autos bezeichnet die Wirkung der Deformation der Druckschläuche, die das Wasser in derselben Richtung am Ende des Paneels herausdrücken. T2 ist eine mechanische Kraft des Autos, die in die gleiche Richtung wie das Auto wirkt und senkrecht zu der Kraft des Autos Fl ist.

Fig. 4) Sie bezeichnet die Funktion der Deckfolie (88) auf den R+L -S- Paneelen (13+22). Sie ist sehr wichtig für die Verminderung der Widerstandskraft Fv, die fortschreitend auf dem ohne Druckfolie (88) gezeichnet ist. Hier sind die Druckröhren (89+90+91) klar zu sehen. Die Pfeile zeichnen die Richtung der Bewegung (Durchfluß des Wassers) außerhalb der Paneele an.

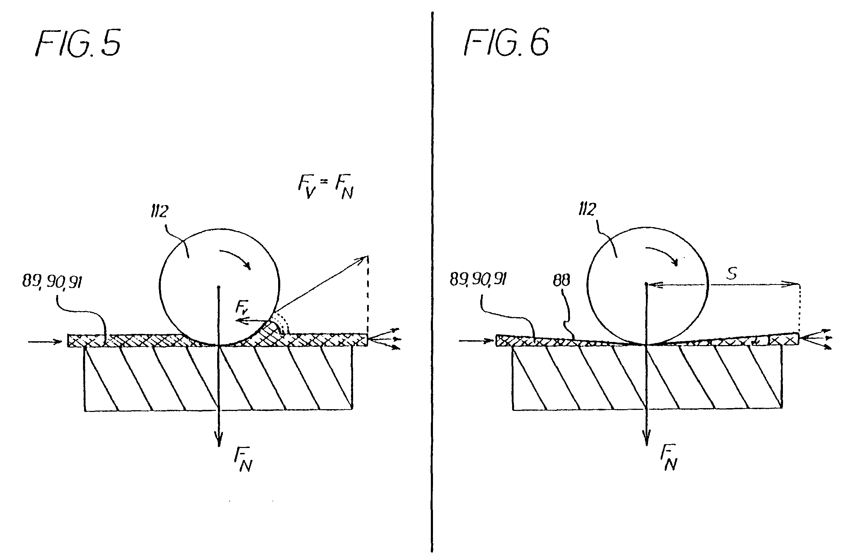

Fig. 5) Prinzip ohne Deckfolie (88)
Die rotierende Bewegung der Räder des Autos auf den nicht gesicherten Druckschläuchen (89+90+91) ruft die Widerstandskraft Fv hervor. Sie wirkt als Bremskraft gegen die Richtung der Bewegung jedes Rades der Autos. So wird die Deformation der Druckschläuche hervorgerufen, wenn die Druckluft Fn entsteht. Die Größe der Widerstandskraft Fv ist gleichmäßig der Größe der Druckkraft Fn verbunden mit der Geschwindigkeit des Autos. Damit ist Zweck und Prinzip der Druckfolie (88) klar.

Fig.6) Prinzip der Druckfolie (88)
Sie bezeichnet die Funktion der Druckfolie auf den R+L -S- Paneelen (13+22). Sie ist sehr wichtig zur Verminderung der Widerstandskraft Fv, die auf dem längeren Abschnitt (S) fortschreitet. Dabei ist dieselbe Qualität der Funktion der Druckschläuche (89+90+91) mit dem Ziel der kleinen Widerstandskraft Fv auch bei den hohen Geschwindigkeiten der Autos vorhanden.

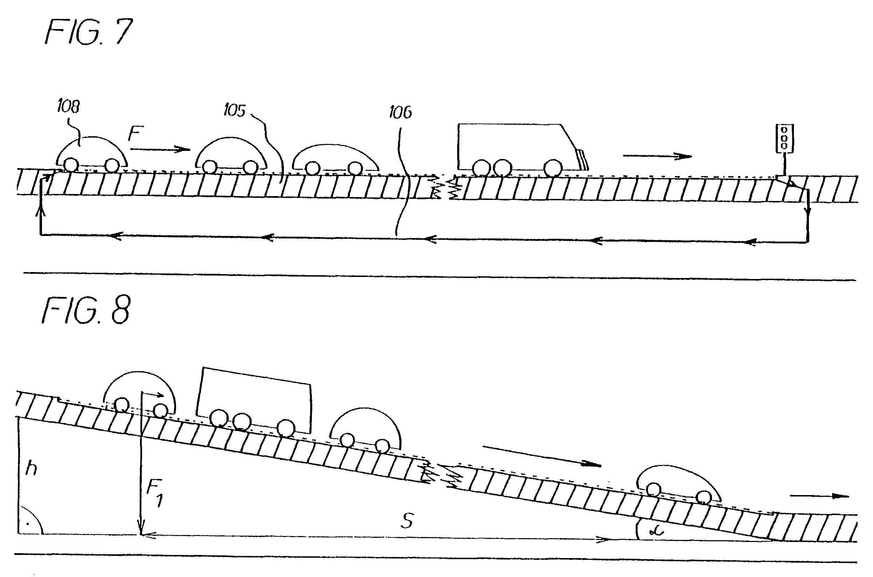

Fig. 7) Prinzip AKEK
Bezeichnet die Unterbringung und Funktion des Elektrowerkes, wo die Kolonne der Autos (108) die schon mechanische Kraft F in einer gemeinsamen Richtung auf einmal an der Einfahrt in die Kreuzung bremsen muß. Die schwarze Linie mit den Pfeilen bezeichnet das Objekt (Wasserregulation).

Fig.8) Bezeichnet die Unterbringung und Tätigkeit des AKEK auf der Scheibenebene mit der Kolonne der Autos, die in einer Richtung hinunter fahren von links nach rechts. Sie entwickeln die elektrische Energie in der Abhängigkeit von der Druckkraft Fl von jedem Auto getrennt.

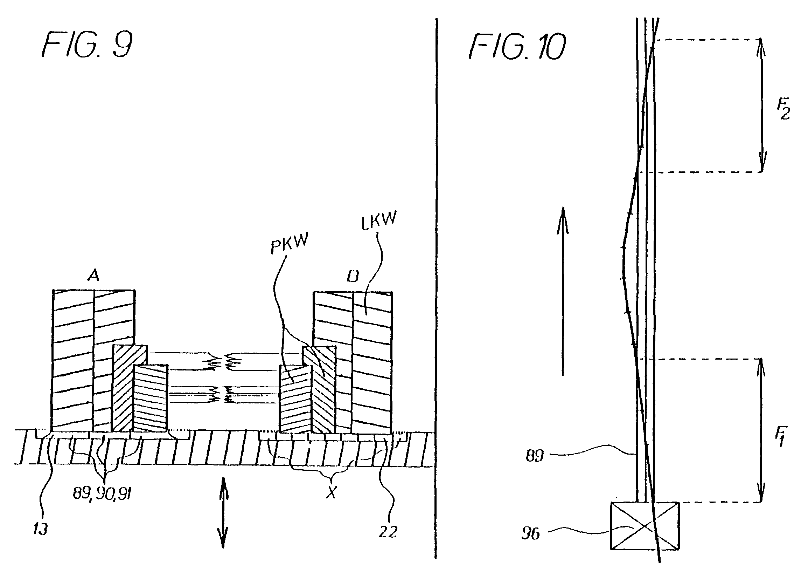

Fig. 9) Bezeichnet die Lage der R+L -S- Paneele (13+22) im Durchschnitt der Fahrbahn, die in zwei Teile A+B getrennt ist.

A) Es ist das rechte Paneel -S- (13) zu sehen, das in seinen Ausmaßen universell zu allen Typen der Fahrzeuge (PKW + LKW) paßt, die auf den Druckröhren (89+90+91) sitzen. Der vordere Teil zeigt die Richtung der beidseitigen Verschiebung der Fahrzeuge.

B) Durchschnittsbild der Links -S- Paneele (22), in die neue Druckröhren (X) installiert sind. Sie sind so verteilt, daß sie allen Gruppen (PKW,LKW) vollkommen entsprechen. Fig. A+B bezeichnet nur das Prinzip der Funktion AKEK.

Fig. 10) Die starke Linie auf dem Bild veranschaulicht das Prinzip der Bewegung des Rades des Autos in der Richtung des Pfeiles. Sie geht zuerst über den Druckbehälter (96), wo sie das Wasser in die Druckschläuche (89) drückt, diese überfährt, und zwar im Abschnitt Fl und F2. Dieser kleine Abschnitt genügt vollkommen für die Umwechslung der kleinen Menge der Elektroenergie. Es ist so gemeint, daß jeder Wagen vom Anfang bis zum Ende des Rechts + Links -S- Paneels (13+22) auf derselben Spur auf 100% fahren muß oder kann.

Fig. 11, Bezeichnet die klassischen Formen A, B, C, D der Lagerung der Druckröhren in -S- Paneelen (13+22). Hier sind die Möglichkeiten der verschiedenen Formen der Bildungen gezeichnet, aber auch verschiedene Durchmesser der Druckröhren. Jede dieser Gruppen hat ihre spezifische charakteristische Leistung. So können wir die verschiedenen Arten der Fahr bahnen zum Zweck der maximalen Leistung des Elektrowerkes unterscheiden.

Fig. 11D) Dder Durchmesser der Druckrohren in den -S- Paneelen nimmt von der Eintrittseite zur Austrittseite ab, so daß eine Druckverstärkung resultiert, die generatorseitig genutzt werden kann.

Das Kraftwerk, wie es an der Fig. 1 zu sehen ist, beruht auf dem Prinzip des geschlossenen Umfangs auf dem System der Rechts + Links -S- Paneele (13+22) aus der Möglichkeit, die Paneele in der Serie oder parallel in der gewählten Länge und Menge zusammen zu verbinden. Es begrenzt nicht die Zahl und Konstruktion der Autos, es transformiert die kinetische Energie der frei fahrenden Autos auf die elektrische Energie.

Vorzugsweise sind die Rechts + LINKS -S- Paneele (13+22) an und in gleicher Linie horizontal mit der Fahrbahn in einer Richtung installiert.

Vorzugsweise sind weiterhin in den Paneelen (13+22) Druckröhren (89+90+91) installiert. Durch diese wird aufgrund der kinetischen Energie und Gewicht des Wagens das Wasser gepresst und im Inneren der Röhren in Fahrtrichtung des Wagens gedrückt, der kürzer als die Druckröhren (89+90+91) ist.

Es kann eine Deckfolie (88) auf der Oberfläche der Rechts + Links -S- Paneele (13+22) befestigt sein, die die Druckrohrleitung (89+90+91) schützt. Die Deckfolie (88) ist an ihrer Außenseite mit einer Antirutschfläche (94) versehen.

Zu Homogenisierung des Wasserflusses kann vor den Rechts + Links - S- Paneelen (13+22) ein Druckbehälter (96) installiert sein, durch den über Einwegventile (43) Wasser in die Druckröhren (89+90+91) gelangt.

Vorzugsweise ist eine Paneeleinlage vorgesehen, die als Dichtungs- und Halterungsdecke der Druckrohrleitung dient. Diese kann an der unteren Fläche durch eine untere Platte gesichert sein und hat vorzugsweise auch eine glatte Oberfläche (95) in Richtung der Druckrohrleitung hat.

Bezugszeichenliste:

13 - RECHTS -S- PANEEL
22 - LINKS -S- PANEEL
33 - LEITUNGSRÖHREN
43 - EINGANGSVENTIL
53 - ZENTRALVENTIL
58 - SICHERHEITSVENTIL
62 - HALTERUNGSSCHRAUBEN
80 - DÜSE
85 - HYDROGENERATOR
87 - FILTER

89 - DRUCKROHRLEITUNG RECHTS 4b
91 - DRUCKROHRLEITUNG LINKS
93 - UNTERE PLATTE
95 - GLATTE OBERFLÄCHE
98 - ENTLUFTUNGSEINRICHTUNG
100 - TRANSFORMATOR
105 - DIE STRASSE
106 - WASSERZIRKULATION
108 - DAS AUTO
112 - DAS RAD DES AUTOS
113 - ELEKTROLEITUNG
60 - VERTEILER 0
63 - VENTIL DES DRUCKKESSELS
83 - DRUCKKESSEL
86 - TURBINE
88 - DECKFOLIE
90 - DRUCKROHRLEITUNG MITTE
92 - PANEELEINLAGE
94 - ANTIRUTSCHFLÄCHE
96 - DRUCKBEHÄLTER
99 - WASSERPUMPE

**Patentansprüche**

1. Vorrichtung zur Gewinnung elektrischer Energie aus kinetischer Energie von Fahrzeugen, umfassend

   - wenigstens einen in einer Fahrbahn anordbaren Druckbehälter für ein Fluid, welcher Druckbehälter (13,22) wenigstens eine im wesentlichen senkrecht zur Fahrbahn komprimierbare Druckkammer (89,90,91) aufweist,
   - wenigstens einen Kreislauf für das Fluid, wobei ein Bestandteil des Fluidkreislaufs die Druckkammer (89,90,91) ist,
   - wenigstens eine in dem Fluidkreislauf angeordnete Turbinen/Generatoreinheit (86,85) zur Gewinnung elektrischer Energie aus der Strömung des Fluids

   **dadurch gekennzeichnet, dass** der Druckbehälter als sich in Fahrbahnrichtung erstreckender länglicher Kasten (13,22) ausgebildet ist, an dessen Vorder- und Rückseite Rohrleitungen (33) für den Fluidkreislauf einmünden.

2. Vorrichtung nach Anspruch 1,
   **dadurch gekennzeichnet,**
   **daß** die Deckseite (88) des Druckbehälters (13,22) die Fahrbahnfläche bildet.

3. Vorrichtung nach Anspruch 2,
   **dadurch gekennzeichnet,**
   **daß** die Oberfläche der Deckseite (88) mit einer Antirutschfläche (94) versehen ist.

4. Vorrichtung nach einem der vorhergehenden Ansprüche,
   **dadurch gekennzeichnet,**
   **daß** in dem Druckbehälter durch Trennwände längliche Druckkammern (89,90,91) gebildet sind, die eine Fluidströmung im wesentlichen nur parallel zur Längsrichtung des Druckbehälters (13,22) zulassen.

5. Vorrichtung nach Anspruch 4,
   **dadurch gekennzeichnet,**
   **daß** der Durchmesser der Druckkammern (89,90,91) von der Vorderseite zur Rückseite des Druckbehälters (13,22) hin abnimmt.

6. Vorrichtung nach einem der vorhergehenden Ansprüche,
   **dadurch gekennzeichnet,**
   **daß** in der Vorderseite des Druckbehälters (13,22) eine Verteilerkammer (96) ausgebildet ist.

7. Vorrichtung nach einem der vorhergehenden Ansprüche,
   **dadurch gekennzeichnet,**
   **daß** in dem Kreislauf wenigstens ein Einwegeventil (43) angeordnet ist.

8. Vorrichtung nach einem der vorhergehenden Ansprüche,
   **dadurch gekennzeichnet,**
   **daß** in dem Kreislauf ein Filter (87) angeordnet ist.

9. Vorrichtung nach einem der vorhergehenden Ansprüche,
   **dadurch gekennzeichnet,**
   **daß** in dem Kreislauf ein Druckspeicher (83) angeordnet ist.

10. Vorrichtung nach einem der vorhergehenden Ansprüche,
    **dadurch gekennzeichnet,**
    **daß** für die Festlegung des Druckbehälters (13,22) eine auf dem Fahrbahnuntergrund befestigbare Platte (93) vorgesehen ist, eine Einlage (92) trägt, deren den Druckkammern (89,90,91) zugewandte Oberfläche (95) glatt ausgebildet ist.

11. Vorrichtung nach einem der vorhergehenden Ansprüche,
    **dadurch gekennzeichnet,**
    **daß** die Druckkammern mehrerer Druckbehälter parallel oder in Reihe verbindbar sind.

**Claims**

1. An apparatus for generating electrical energy from vehicular kinetic energy, comprising

- at least one pressurized fluid vessel (13,22) permitting incorporation in a roadway, including at least one compressible pressure chamber (89, 90, 91 ) substantially perpendicular to the roadway,
- at least one circuit for said fluid, said pressure chamber (89, 90, 91) being a component of said fluid circuit,
- at least one turbine/generator unit (86, 85) incorporated in said fluid circuit for generating electrical energy from the flow of said fluid,

**characterized in that** said pressurized fluid vessel is configured as an elongated tray (13, 22) extending lengthwise in said roadway, fluid circuit tubes (33) porting into/from the front end and rear end respectively of said tray.

2. The apparatus as set forth in claim 1, **characterized in that** the cover side (88) of said pressurized fluid vessel (13,22) is the pavement of said roadway.

3. The apparatus as set forth in claim 2, **characterized in that** the surface of said cover side (88) is finished with an anti-skid surface (94).

4. The apparatus as set forth in any of the preceding claims, **characterized in that** elongated pressure chambers (89, 90, 91) are formed in said pressurized fluid vessel by partitions permitting fluid flow substantially only parallel to the longitudinal centerline of said pressurized fluid vessel (13,22).

5. The apparatus as set forth in claim 4, **characterized in that** the diameter of said pressure chambers (89, 90, 91 ) is reduced from the front end to the rear end of said pressurized fluid vessel (13,22).

6. The apparatus as set forth in any of the preceding claims, **characterized in that** in said front end of said pressurized fluid vessel (13,22) a distribution chamber (96) is configured.

7. The apparatus as set forth in any of the preceding claims, **characterized in that** at least one one-way valve (43) is incorporated in said circuit.

8. The apparatus as set forth in any of the preceding claims, **characterized in that** a filter (87) is incorporated in said circuit.

9. The apparatus as set forth in any of the preceding claims, **characterized in that** an accumulator (83) is incorporated in said circuit.

10. The apparatus as set forth in any of the preceding claims, **characterized in that** for defining said pressurized fluid vessel (13,22) a plate securable to the roadway subbase is provided, mounting an insert (92), the surface (95) of which facing said pressure chambers (88, 90, 91) is configured smooth.

11. The apparatus as set forth in any of the preceding claims, **characterized in that** said pressure chambers of several pressurized fluid vessels are connectable in parallel or in series.

## Revendications

1. Dispositif pour obtenir de l'énergie électrique à partir de l'énergie cinétique de véhicules, comprenant :

   - au moins un réservoir à pression pour un fluide, susceptible d'être disposé dans une voie routière, lequel réservoir à pression (13, 22) présente au moins une chambre à pression (89, 90, 91) susceptible d'être comprimée de façon essentiellement perpendiculaire par rapport à la voie routière,
   - au moins un circuit pour le fluide ; une partie constituante du circuit de fluide étant la chambre à pression (89, 90, 91 ),
   - au moins une unité de turbine/de générateur (86, 85) disposée dans le circuit de fluide destinée à obtenir de l'énergie électrique à partir du courant de fluide,

   **caractérisé en ce que** le réservoir à pression est formé en tant que caisse (13, 22) longitudinale s'étendant en direction de la voie routière sur le côté avant et arrière duquel, débouchent des tubes (33) pour le circuit de fluide.

2. Dispositif selon la revendication 1, **caractérisé en ce que** le côté de couvercle (88) du réservoir à pression (13, 22) forme la surface de la voie routière.

3. Dispositif selon la revendication 2, **caractérisé en ce que** la surface supérieure du côté de couvercle (88) est pourvu d'une surface anti-dérapante (94).

4. Dispositif selon une des revendications précédentes, **caractérisé en ce que** des chambres à pression (89, 90, 91) longitudinales sont formées dans le réservoir à pression par des parois de séparation, lesquelles chambres laissent entrer un courant de fluide de façon essentiellement parallèle à la direction longitudinale du réservoir à pression (13, 22).

5. Dispositif selon la revendication 4, **caractérisé en ce que** le diamètre des chambres à pression (89, 90, 91 ) diminue à partir du côté avant vers le côté arrière du réservoir à pression (13, 22).

6. Dispositif selon une des revendications précédentes, **caractérisé en ce qu'**une chambre de répartition (96) est formée dans le côté avant du réservoir à pression (13, 22).

7. Dispositif selon une des revendications précédentes, **caractérisé en ce qu'**au moins une soupape à sens unique (43) est disposée dans le circuit.

8. Dispositif selon une des revendications précédentes, **caractérisé en ce qu'**un filtre (87) est disposé dans le circuit.

9. Dispositif selon une des revendications précédentes, **caractérisé en ce qu'**un réservoir à pression (83) est disposé dans le circuit.

10. Dispositif selon une des revendications précédentes, **caractérisé en ce qu'**on a prévu une plaque (93) susceptible d'être fixée sur le sous-sol de la voie routière pour fixer le réservoir à pression (13, 22) et que laquelle plaque porte un insert (92) dont la surface supérieure (95) orientée vers les chambres à pression (89, 90, 91) est formé de façon lisse.

11. Dispositif selon une des revendications précédentes, **caractérisé en ce que** les chambres à pression sont susceptibles d'être reliées à plusieurs réservoirs à pression de façon parallèle ou en ligne.

FIG.1

FIG. 2

FIG.3

FIG.4

FIG.5

FIG.6

FIG. 7

FIG. 8

FIG. 9

FIG. 10

EP 1 149 242 B1

EP 1 149 242 B1

FIG. 11 B

FIG. 11 D

FIG. 11 A

FIG. 11 C

15